# EUROPEAN PATENT SPECIFICATION

(11) **EP 3 980 247 B1**
(45) Date of publication and mention of the grant of the patent: **18.06.2025**
(21) Application number: 19761760.8
(22) Date of filing: 14.08.2019
(51) Int. Cl.: G06F 30/23, B33Y 50/00, G06F 113/10

(54) **METHOD FOR GENERATING A STRUCTURE MESH, USE OF A STRUCTURE MESH, COMPUTER PROGRAM AND COMPUTER-READABLE MEDIUM**
VERFAHREN ZUR ERZEUGUNG EINES STRUKTURNETZES, VERWENDUNG EINES STRUKTURNETZES, COMPUTERPROGRAMM UND COMPUTERLESBARES MEDIUM
PROCÉDÉ DE GÉNÉRATION D'UN MAILLAGE DE STRUCTURE, UTILISATION D'UN MAILLAGE DE STRUCTURE, PROGRAMME INFORMATIQUE ET SUPPORT LISIBLE PAR ORDINATEUR

(43) Date of publication of application: 13.04.2022
(73) Proprietor: Siemens Industry Software NV, 3001 Leuven (BE)
(72) Inventor: COMPERE, Gaetan, 5032 Bossière (BE); LAUBER, Boris, 82547 Eurasburg (DE)
(74) Representative: Siemens Patent Attorneys
(86) International application number: PCT/EP2019/071822
(87) International publication number: WO 2021/028037

(56) References cited:
- EP-A1- 2 198 405
- WO-A1-2017/074490
- US-A1- 2016 246 908
- KENJI SHIMADA ET AL: "Bubble mesh", PROCEEDINGS OF THE THIRD SYMPOSIUM ON SOLID MODELING AND APPLICATIONS. SALT LAKE CITY, MAY 17 - 19, 1995; [PROCEEDINGS OF THE SYMPOSIUM ON SOLID MODELING AND APPLICATIONS], NEW YORK, ACM, US, 1 December 1995 (1995-12-01), pages 409 - 419, XP058190894, ISBN: 978-0-89791-672-1, DOI: 10.1145/218013.218095
- NOGUCHI SO ET AL: "Acceleration of Dynamic Bubble Mesh Generation for Large-Scale Model", IEEE TRANSACTIONS ON MAGNETICS, IEEE SERVICE CENTER, NEW YORK, NY, US, vol. 50, no. 2, 1 February 2014 (2014-02-01), pages 453 - 456, XP011541044, ISSN: 0018-9464, [retrieved on 20140226], DOI: 10.1109/TMAG.2013.2281617

## Description

The invention refers to a method for generating a structure mesh of a structure and simulating the additive manufacturing build-up process of the structure, wherein said structure mesh is to be build-up in a three-dimensional build-up volume in an additive manufacturing build-up process and which comprises at least one specimen and at least one support for supporting the at least one specimen on a boundary of the build-up volume, especially on a build-up platform which defines a lower part of a boundary of the build-up volume, wherein the structure mesh can be used in simulating the additive manufacturing build-up process of the structure. The invention also refers to a use of such a structure mesh. Finally the invention refers to a computer program and a computer-readable medium.

A large number of additive manufacturing build-up processes, also known as generative manufacturing or 3D printing processes, are known for the fast and cost-effective production of both prototypes and end products. These processes, which are summarized under the term rapid prototyping, enable in particular the direct production of individual specimens, also known as parts to print, on the basis of digital construction data, especially CAD data of the specimens. Production can be carried out using liquid, strip, wire or powder starting materials, which is why there are few restrictions with regard to the specimen geometries and specimen materials. Thanks to the layer-by-layer production, previously unattainable geometries can be produced with these processes.

In the case of metallic powder starting materials, primarily two groups of additive manufacturing build-up processes are known. These are on the one hand powder bed fusion based build-up processes, such as for example the Selective Laser Melting ("SLM") process or the Selective Electron Beam Melting ("SEBM") process, and on the other hand powder feeding processes, such as for example the Laser Material Deposition ("LMD") process.

In the SLM process, a metal powder to be processed is applied in a thin layer to a build-up platform and then completely melted locally using a laser radiation so that it forms a solid material layer after solidification. In order to enable a desired specimen to be manufactured in layers, the build-up platform is then lowered by the amount of one layer thickness, metal powder is applied again and a laser beam is then directed over the new metal powder layer. This procedure is repeated until the desired specimen is completed. The SEBM process is almost identical to the SLM process, except that the metal powder is melted using an electron beam instead of laser radiation.

In addition to the processes already mentioned, there are also those in which the metal powder is melted using a plasma jet, to name just one example.

Although the following description of the present invention often refers to a powder bed fusion based build-up process, the invention is not limited to this and can be applied equally in connection with any other additive manufacturing build-up process.

In the above mentioned additive manufacturing build-up processes a specimen that is build-up in a three-dimensional build-up volume may have to be supported by a support connected to a boundary of the build-up volume, especially a build-up volume platform which defines a lower boundary of the build-up volume. Such a support is used on the one hand to support areas if the specimen, such as areas of high overhang angles, typically lager than 45°. On the other hand the support dissipates heat to the boundary of the build-up volume while the at least one specimen is build-up. In such cases a structure comprises the at least one specimen and the at least one support is build-up in the three-dimensional build-up volume in the additive manufacturing build-up process.

Recently, simulation of the additive manufacturing build-up process of such structures becomes more and more important to avoid manufacturing of specimens which do not meet specified quality standards and/or deviate from a specified specimen shape. For example, it is known to carry out thermal, mechanical and/or thermos-mechanical simulations of the additive manufacturing build-up process. This allows to get information on thermal issues during the later build-up and to capture a preview on distortions that might arise due to the complex thermo-mechanical process during the additive manufacturing build-up process. Furthermore, with the help of such a simulation, it can be predicted how the at least one specimen will be deformed during its build-up process due to temperature influences. It can thus be assessed whether the at least one support is suitable for manufacturing the at least one specimen without or at least without critical heat deformation of the at least one specimen. The structure, i.e. the at least one specimen and the at least one support, has to be considered for both thermal simulation and mechanical analysis. Thus a structure mesh has to be generated to simulate the behavior of the structure during the build-up process.

From EP 2 198 405 A1, US 2016/246908 A1 and KENJI SHIMADA ET AL: "Bubble mesh" [PROCEEDINGS OF THE THIRD SYMPOSIUM ON SOLID MODELING AND APPLICATIONS. SALT LAKE CITY, MAY 17 - 19, 1995; [PROCEEDINGS OF THE SYMPOSIUM ON SOLID MODELING AND APPLICATIONS], NEW YORK, ACM, US, 1 December 1995 (1995-12-01), pages 409-419, XP058190894, DOI: 10.1145/218013.218095, ISBN: 978-0-89791-672-1] respectively disclose aspects of meshing in connection with additive manufacturing are known.

Digital construction data, especially CAD data, for the at least one specimen are usually available such that at least one specimen mesh can be generated based on these digital construction data. For example, data may already be available which represent the at least one specimen meshed with an exact tetrahedron mesh or with a mesh based on voxelization technique. In case of an exact tetrahedron mesh the geometry of the at least one specimen is approximated quite accurately as compared to the voxelization technique which results in a relatively rough approximation of the geometry of the at least one specimen.

The at least one support can have multiple shapes and structures and is usually relatively geometrically complex, especially compared with the at least one specimen. The at least one support is represented by surface data that describe a facetted surface of the at least one support. The facetted surface may consist of several facetted surface parts which are either connected to each other or separated from each other. The facetted surface may be formed by a plurality of triangles, for example. However, the surface data and the facetted surface are not meshable. Hence, the at least one support has to be treated and meshed as at least one solid structure and then a homogenized material may be used to correctly represent anisotropic behavior and at the same time have low degrees of freedom to have acceptable calculation times.

Accordingly, the existing surface data that describe a facetted surface of the at least one support have to be converted into data of at least one solid geometry, i.e. volume data, that can be meshed. So far, the generation of the solid geometry is done by extrusion of support faces and interpreting parameters, such as angled support information or distance to a build plate, of the facetted supports to a solid body. As a plurality of different support types and a large number of parameters exists, this "reverse engineering" approach is quite inrobust and often fails. In addition, only a few support types can be converted with the current method which is a large limitation of the actual simulation capabilities.

Furthermore, in existing methods for generating a structure mesh a large computational effort is required to connect sub-meshes of the structure mesh which have been generated before.

The term "meshing" often used in this context, means for example that a total area, i.e. either a surface or a volume, is divided into a finite number of subareas, i.e. discrete sections of the total area, also denoted as elements, and thus discretized. For example, a volume can be divided into cuboids, hexahedra, pyramids or tetrahedral.

It is an object of the present invention to provide an alternative method for generating a structure mesh that does not have the disadvantages of the methods of the prior art.

This object is solved by a method of the type mentioned above, characterized in that the method comprises the steps of:
a) providing a build-up volume surface mesh that represents a boundary of the three-dimensional build-up volume;
b) providing at least one specimen mesh including a specimen surface mesh representing at least the outer surface of a corresponding specimen within an interior space surrounded by the build-up volume surface mesh;
c) creating a three-dimensional background mesh in the cavity between the build-up volume surface mesh and the at least one specimen surface mesh using the at least one specimen surface mesh as a seed mesh, wherein the background mesh is composed of elements consisting of background mesh nodes and background mesh edges extending between the background mesh nodes;
d) identifying at least one support mesh and at least one environment mesh which is defined by the background mesh except for regions of the at least one support mesh using the background mesh and surface data, in particular STL data , that describe a facetted surface of the at least one support, wherein the at least one support mesh and the at least one specimen mesh together define the structure mesh which is generated in such a way that the at least one support mesh, the at least one specimen mesh and the at least one environment mesh are connected with each other so that two neighboring meshes share the same nodes at their interfaces in their transition area.

Accordingly, the inventive method provides a meshing approach that resolves the problems associated with meshing the at least one support while maintaining the simulation accuracy in a later additive manufacturing build-up process simulation by keeping/using at least one specimen mesh which is usually a high quality mesh especially as a seed mesh. The seed mesh is preferably a two-dimensional seed mesh, especially a two-dimensional shell seed mesh, which can extend along at least one surface, such as a plane or a curved surface, in three-dimensional space. Using the at least one specimen surface mesh as a seed mesh results in nodes and edges of the part of the specimen surface mesh that represents the outer surface of the specimen to match background mesh nodes and background mesh edges at the outer boundary of the created background mesh. As the structure mesh as a whole is generated in such a way that the at least one support mesh, the at least one specimen mesh and the at least one environment mesh are connected with each other so that two neighboring meshes share the same nodes at their interfaces in their transition area, the computational effort required for interconnecting the at least one support mesh, the at least one specimen mesh and the at least one environment mesh in state-of-the-art processes is no longer necessary. In the inventive method all different meshes are implicitly and consistently connected. There is for example no need to create any geometrical brep model for at least one support sub-volume and/or at least one environment sub-volume of the build-up volume and therefore no need to explicitly create connections between the different meshes which would lead to massive problems for complex geometric components. The term "brep" stands for "boundary representation" and brep models are known in the art. Furthermore, the inventive method allows to robustly mesh any kind of structure that is to be build-up in an additive manufacturing build-up process and the environment surrounding the structure. Thus, as compared to prior art solutions, there is no limitation to any kind of structure and/or any type of support. Examples of supports that can be meshed with the inventive method are point supports, line supports, block supports, volume supports, cone supports, gusset supports, contour supports and web supports to name just a few. If the additive manufacturing build-up process is a powder bed fusion based build-up process, the environment mesh can be a powder mesh representing the powder used to build-up the structure. The term "STL data" means data in STL file format, wherein the abbreviation STL stands for "stereolithography". The term "identifying" used in step d) may also be replaced by the term "capturing".

According to the invention step b) comprises providing at least one three-dimensional specimen mesh which represents a discretization not only of the surface of the at least one specimen but of the entire volume of the at least one specimen, and step c) comprises discretizing the cavity with background mesh elements having the same size and/or shape as three-dimensional specimen mesh elements of the at least one three-dimensional specimen mesh, and/or step c) comprises creating a three-dimensional background mesh whose background mesh elements are tetrahedron-shaped, pyramid-shaped, hexahedron-shaped and/or cuboid-shaped.

In general, the three-dimensional specimen mesh elements and the three-dimensional background mesh elements may have any three-dimensional shape.

Step c) may comprise creating a background mesh having smaller elements in a region of the build-up volume where the at least one support is expected to be located, in particular in a region defined by a geometrical bounding box that encloses the at least one support and comprises all elements thereof, and larger elements outside this region. In this way, regions that are primarily to be simulated later can be resolved higher than the remaining regions. The efficiency of the inventive method and the success of step d) in identifying/capturing well the geometrical shape and details of the at least one support directly depends on the size of the background mesh elements. If the background mesh elements are larger than a thickness of the at least one support, the at least one support might not be fully identified/captured. On the other hand, if the background mesh has more background mesh elements than needed to properly identify/capture the at least one support, the method will be unnecessarily costly in terms of computational time.

In a preferred embodiment step d) comprises identifying surfaces, in particular outer surfaces, of the at least one support within the background mesh by identifying points of intersection of the surfaces of the at least one support with background mesh edges, creating new nodes at the points of intersection, thus splitting the respective background mesh edges, and interconnecting at least some of the new nodes to create at least one support surface mesh. In other words, it is identified to which region(s) each background mesh node belongs (an environment/powder region or a support region) and if it belongs to the boundary of a specimen. Then, the background mesh edges of the background mesh whose background mesh nodes do not all belong to a common region are split. New nodes created by the split operations are therefore at the boundary of at least two regions and will be considered as belonging to the regions of both nodes of the initial edge. As a consequence, all resulting elements fully belong to one region. The resulting at least one support surface mesh follows well the support shapes, even for shapes that are far from any canonic shape, extruded shape or any relatively simple shape, and even if the at least one support is a very open structure, i.e. a structure without clear boundary walls. At least one support surface mesh is thus automatically connected to a specimen mesh and to the build volume surface mesh.

The surfaces of the at least one support identified in step d) may be surfaces of a sub-volume of the build-up volume that represents the at least one support as simulated in contrast to the facetted surface of the at least one support described in the surface data, in particular STL data, and/or in contrast to the at least one support as actually build-up in the additive manufacturing build-up process.

Preferably, the sub-volume of the build-up volume that represents the at least one support as simulated is defined as the set of points within the build-up volume that are located at a distance inferior to a threshold D to the closest facet of the facetted surface of the at least one support described by the surface data. The sub-volume thus corresponds to the solid geometry that is used instead of the pure surface data to represent the at least one support in later simulations. The threshold D can be defined in various ways. In particular, the threshold D is chosen as the minimal distance such that any point located in the interior of the at least one support is at most at a distance d to the closest facet of the at least one support, wherein the value of d corresponds to the value of D. If the at least one support is very regular, this choice may lead to a consistent volume region without any powder inclusion. If the threshold D is chosen too high, the later simulation of the at least one support becomes too inaccurate. On the other hand, if the threshold D is chosen too small, so-called bubble meshes may arise. For supports that have a closed boundary or a nearly closed boundary, i.e. a fragmented boundary or a boundary with holes, such as for example grid-type supports, the value for D may be chosen to be smaller as compared to supports that have an open or more open boundary to limit the volume of the resulting at least one support mesh. The consequence may be that environment bubble meshes may be created inside the at least one support region, but these may be eliminated as described below.

Evaluating if a node is at a distance inferior to D to the at least one support structure may be accelerated by using spatial hashtables and/or RTrees.

It is possible that step d) comprises identifying an environment mesh, in particular a powder mesh, which is an environment bubble mesh enclosed in a support mesh, wherein the environment bubble mesh is eliminated by making it part of the support mesh in which it is enclosed. Additionally or alternatively it is possible that step d) comprises identifying a support mesh which is a support bubble mesh not connected to the at least one specimen nor a build-up volume boundary, wherein the support bubble mesh is eliminated by making it part of the at least one environment mesh. The support bubble mesh preferably is also not connected to another identified support mesh and thus fully enclosed in an environment mesh. The bubble meshes can also be described as defects to be eliminated. The bubble meshes may be caused, for example, by the threshold D being chosen too small.

Especially after eliminating bubble meshes, at least one resulting support mesh may be modified to eliminate any undesirable offset obtained by at least one of the above steps. This may be achieved by computing a new support mesh boundary that is located at a distance E inside the initial support mesh boundary. The value of E may correspond to the value of D mentioned above. The interior of the resulting mesh boundary may be the new support mesh. In this way, a support mesh is obtained that more exactly matches the at least one support.

Especially after eliminating bubble meshes and/or after modifying at least one support mesh, at least one resulting mesh may be improved to meet a predefined element quality and element size.

The background mesh elements may be adapted by a mesh adaptation method, especially a local mesh adaptation method, in particular to obtain elements of the same size or at least substantially the same size and/or of good quality. A local mesh adaptation method may comprise applying local operations that replace a limited number of elements by other elements that altogether form a mesh of the same cavity as the initial elements but have a higher quality and/or a different size.

Advantageously, at least one surface mesh, especially surface meshes made of boundaries of specimen, support and environment regions within the build-up volume, is remeshed by replacing the at least one surface mesh with a new surface mesh of at least substantially uniform edge length. The at least one new surface mesh resulting from the remeshing is preferably used as seed mesh in generating new three-dimensional meshes, especially new tetrahedral meshes. In this way, elements of the same size or at least substantially the same size can be achieved.

The interior of the at least one specimen defined by the at least one specimen surface mesh may be meshed, especially in accordance with a discretization that is extracted from existing CAD data of the at least one specimen.

If a support surface mesh created in step d) defines a closed volume, this volume may be meshed by a volume meshing technique. The resulting entire support mesh may comprise pyramid-shaped, hexahedron-shaped, cuboid-shaped and/or tetrahedron-shaped mesh elements. Preferably, the entire support mesh is a tetrahedral mesh. If a support can be initially defined by a closed volume, e.g. closed faceting or brep solid geometry, it may be meshed by classical volume meshing techniques. Its volume may not be part of the background mesh and it may be meshed in the same way as a specimen. This offers the possibility to obtain meshes that very accurately represent given geometrical models for a specific support. In the extreme case where all supports initially receive a closed geometrical model, the at least one powder mesh can still be obtained without requiring a geometrical model for the powder region.

The above mentioned meshing of the interior of the at least one specimen and/or of a closed volume defined by a support surface mesh may be performed after elimination of at least one bubble mesh and/or after improvement of a resulting mesh. Especially, the above mentioned meshing of the interior of the at least one specimen and/or of a closed volume defined by a support surface mesh may be the last step of the inventive method. However, it is also possible to mesh the interior of the at least one specimen when the at least one specimen mesh is provided in step b).

In principle, it is possible that the mesh elements of the at least one specimen mesh, the at least one support mesh, the structure mesh and/or the at least one environment mesh have the same size and/or shape.

With the inventive method a structure mesh and an environment mesh can be generated automatically without a user having to actively intervene in the generation process, i.e. without the necessity of manual interaction. As users do not have to interact during the mesh generation procedure, they do not need to have any detailed knowledge on the mesh generation procedure, and thus they do not have to be experts in the field of meshing techniques.

The invention also regards a use of a structure mesh of a structure generated according to the inventive method for simulating, especially thermal, mechanical and/or thermos-mechanical simulating, an additive manufacturing build-up process, in particular a powder bed fusion based build-up process, of the structure.

The invention furthermore regards a computer program comprising instructions which, when the program is executed by at least one computer, cause the at least one computer to carry out the inventive method.

Moreover, the invention regards a computer-readable medium comprising instructions which, when executed on at least one computer, cause the at least one computer to perform the steps of the inventive method.

The computer-readable medium can be, for example, a CD-ROM or DVD or a USB or flash memory. It should be noted that a computer-readable medium should not be understood exclusively as a physical medium, but that such a medium can also exist in the form of a data stream and/or a signal representing a data stream.

Further features and advantages of the present invention become clear by the following description of embodiments of the invention with reference to the enclosed drawing. The figure shows:
Figs.1-5 a purely schematic illustration illustrating steps of a method for generating a structure mesh according to a first embodiment of the present invention;
Fig.6 a purely schematic illustration illustrating the step of identifying support meshes of a method for generating a structure mesh according to a second embodiment of the present invention;
Fig.7 a spatial representation of a part of another kind of support arrangement by means of its facetted surfaces;
Fig.8 a section view along section line VIII-VIII in figure 7 showing the support arrangement as build-up as well as simulated;
Fig.9 a spatial representation of yet another kind of support arrangement by means of its facetted surfaces;
Fig.10 a section view along section line X-X in figure 9 showing the support arrangement as build-up as well as simulated;
Fig.11 a spatial representation of yet another kind of support arrangement by means of its facetted surfaces; and
Fig.12 a section view along section line XII-XII in figure 11 showing the support arrangement as build-up as well as simulated.

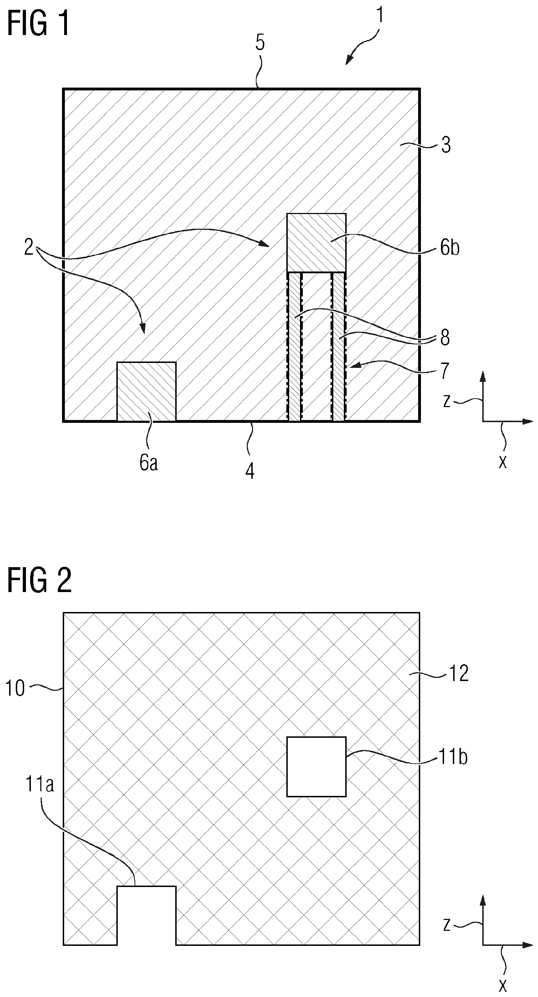

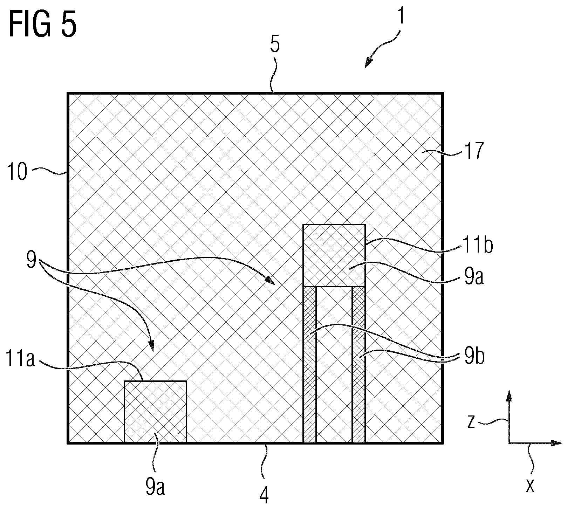

Figures 1-5 show a purely schematic illustration illustrating steps of a method according to a first embodiment of the present invention. Figure 1 shows an X-Z sectional view of a three-dimensional build-up volume 1 with a structure 2 in it, which has been build-up or is to be build-up by a powder bed based additive manufacturing build-up process which may be a selective laser melting, SLM, process. In the SLM process, a metal powder 3 to be processed is applied in a thin layer to a build-up platform 4 defining a lower part of a boundary 5 of the build-up volume 1 and then completely melted locally using a laser radiation so that it forms a solid material layer after solidification. The boundary 5 of the build-up volume 1 is partly shown in figures 1 and 5, for example. For reasons of illustration, only four of the total of six boundary surfaces of the build-up volume 1 can be seen in these figures. The above mentioned procedure is repeated layer by layer until the desired structure 2 is completed. The structure 2 consists of two cuboid specimens 6a,b and a complex support arrangement 7 which comprises two nearly columnar supports 8 and supports the specimen 6b shown in figure 1 on the right on the build-up platform 4. The supports 8 thus each extend at a distance from each other between the build-up platform 4 and the specimen 6b and connect the build-up platform 4 with the specimen 6b. The other specimen 6a shown in figure 1 on the left is directly placed on the build-up platform 4 without using any supports 8.

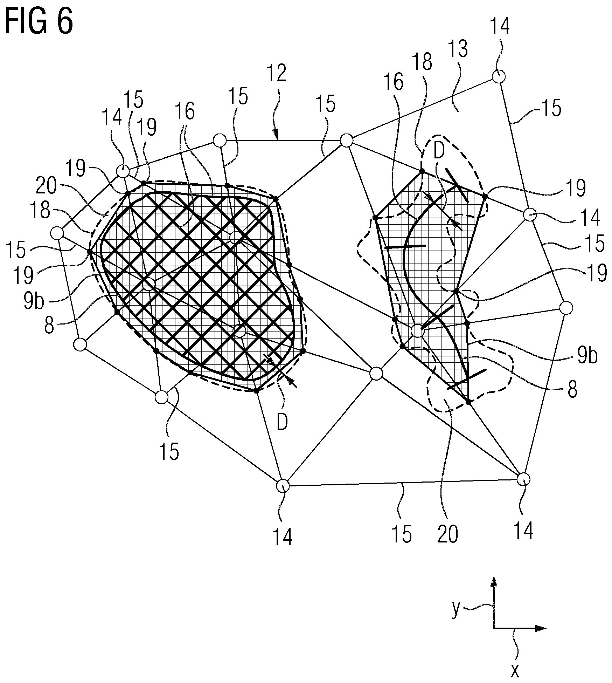

The method according to the first embodiment of the present invention is used to generate a structure mesh 9 of the structure 2. The structure mesh 9 consists of two specimen meshes 9a and at least one support mesh 9b. First, a build-up volume surface mesh 10 that represents the boundary 5 of the three-dimensional build-up volume 1 is provided. Then, two specimen surface meshes 11a,b each representing the outer surface of a corresponding specimen 6a,b are provided within an interior space surrounded by the build-up volume surface mesh 10. The specimen surface meshes 11a,b are based on available CAD data of the specimens 6a,b. In a next step, a three-dimensional background mesh 12 is created in the cavity between the build-up volume surface mesh 10 and the two specimen surface meshes 11a,b using both specimen surface meshes 11a,b as two-dimensional seed meshes, as can be seen in figure 2. The resulting background mesh 12 is composed of tetrahedron-shaped elements 13 consisting of background mesh nodes 14 and background mesh edges 15 extending between the background mesh nodes 14. For the sake of simplicity, in the X-Z sectional views of figures 1-5, the meshes are merely indicated by lines or squared areas. The squared areas are thus only intended to indicate that the respective area represents a mesh. The squares of the squared areas do not allow any conclusions to be drawn about the actual type or size of mesh elements and connections between meshes. Different sizes of squares only serve to distinguish different meshes and do not necessarily mean that the respective meshes have different mesh sizes. However, background mesh elements 13 are shown in connection with the second embodiment in figure 6. Using both specimen surface meshes 11a,b as seed meshes results in nodes and edges of the specimen surface meshes 11a,b to match background mesh nodes 14 and background mesh edges 15 at the outer boundary of the background mesh 12.

For both supports 8 only surface data, more specifically STL data, instead of CAD construction data are available. These surface data describe facetted surfaces 16 of the two supports 8 and have to be converted into data of at least one solid geometry, i.e. volume data, that can be meshed. To achieve this, two support meshes 9b and one environment mesh 17, in this example a powder mesh, which is defined by the background mesh 12 except for regions of the two support meshes 9b are identified using the background mesh 12 and the surface data of the supports 8. More precisely, surfaces 18 of the two supports 8 are identified within the background mesh 12 by identifying points of intersection 19 of the surfaces 18 of the two supports 8 with background mesh edges 15. At the points of intersection 19 new nodes are created and thus the respective background mesh edges 15 are split. Then, at least some of the created new nodes are interconnected to create support meshes 9b and environment meshes 17. The surfaces 18 that intersect the background mesh edges 15 are surfaces 18 of a sub-volume 20 of the build-up volume 1 that represents the two supports 8 as simulated later in contrast to the facetted surfaces 16 of the two supports 8 and/or in contrast to the supports 8 as actually build-up in the additive manufacturing build-up process. The sub-volume 20 is defined as the set of points within the build-up volume 1 that are located at a distance inferior to a threshold D to the closest facet of the facetted surfaces 16 of the two supports 8. In the present example, the threshold D is chosen as the minimal distance such that any point located in the interior of the supports 8 is at most at a distance d to the closest facet of the facetted surfaces 16 of the two supports 8, wherein the value of d corresponds to the value of D. The sub-volume 20 and the threshold D are shown in figures 6, 8, 10 and 12.

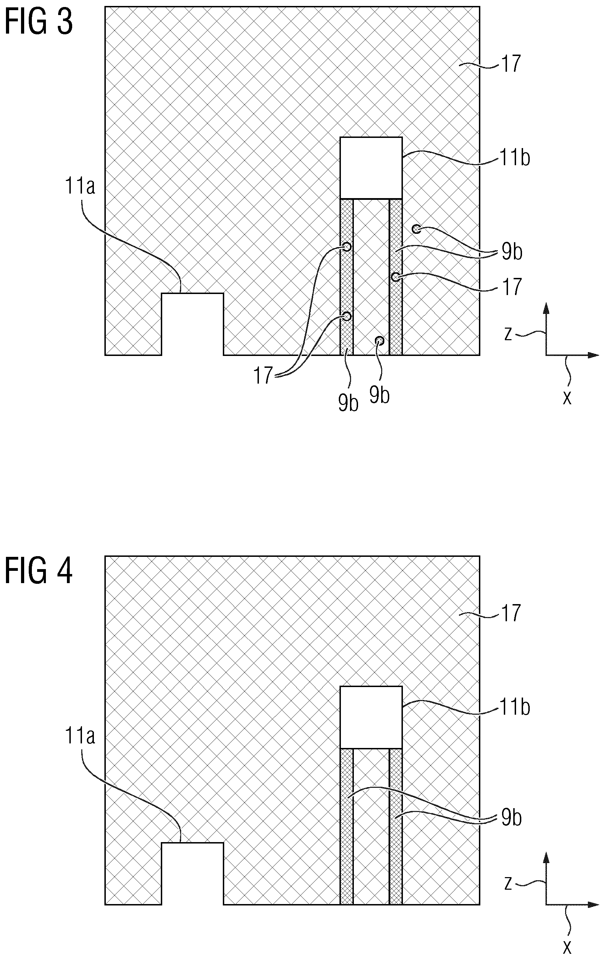

In the present example, four support meshes 9b and four environment meshes 17 are created, wherein two of the four support meshes 9b are support bubble meshes and three of the four environment meshes 17 are environment bubble meshes, as can be seen in figure 3. The support bubble meshes 9b are fully enclosed in the environment mesh 17 which is no environment bubble mesh. Hence, the support bubble meshes 9b are neither connected to specimen 6b, nor to boundary 5, nor to another support mesh 9b. The environment bubble meshes 17 are each enclosed in one of the two support meshes 9b which are no support bubble meshes.

In the next step, the two support bubble meshes 9b are eliminated by making them part of the only environment mesh 17 which is not an environment bubble mesh. Likewise, the three environment bubble meshes 17 are eliminated by making them part of the respective support mesh 9b in which they are enclosed. The result of this bubble elimination procedure is that only two support meshes 9b and one environment mesh 17 remain, which can be seen in figure 4.

Thereafter, at least some of the resulting meshes are improved to meet a predefined element quality and element size. More precisely, surface meshes made of boundaries of specimen, support and environment regions within the build-up volume 1 are remeshed. This is done by replacing a respective surface mesh, in particular a surface mesh between the support 8a and/or support 8b and the powder environment, with a new surface mesh of at least substantially uniform edge length. The new surface mesh resulting from the remeshing may than be used as a seed mesh in generating a corresponding new three-dimensional mesh. Additionally or alternatively, the background mesh elements 13 may be adapted by a common mesh adaptation method.

Finally, the interior of the two specimens 6a,b defined by the specimen surface meshes 11a,b is meshed in accordance with a discretization that is extracted and/or taken over from the existing CAD data of the specimens 6a,b. Additionally or alternatively, if a support surface mesh of the support meshes 9a,b defines a closed volume, this closed volume may be meshed by a common volume meshing technique.

The structure mesh 9 is thus generated in such a way that the two support meshes 9b, the two specimen meshes 9a and the environment mesh 17 are connected with each other so that two neighboring meshes share the same nodes at their interfaces in their transition area. The generated structure mesh 9 can be used for simulating, especially thermal, mechanical and/or thermos-mechanical simulating, the powder bed fusion based additive manufacturing build-up process of the structure 2. It should be clear that the embodiments of the inventive method described herein can also be used in conjunction with any other additive manufacturing build-up processes.

Figure 6 shows a purely schematic illustration illustrating the step of identifying support meshes 9b of a method for generating a structure mesh 9 according to a second embodiment of the present invention. Thereby, figure 6 represents an X-Z sectional view of a three-dimensional build-up volume 1. The method according to the second embodiment differs from the method according to the first embodiment only in that a different kind of support arrangement 7 is meshed, i.e. different support meshes 9b are identified. More precisely, the support arrangement 7 in the second embodiment consists of a block support 8 shown on the left side in figure 6 and a line support 8 shown on the right side in figure 6.

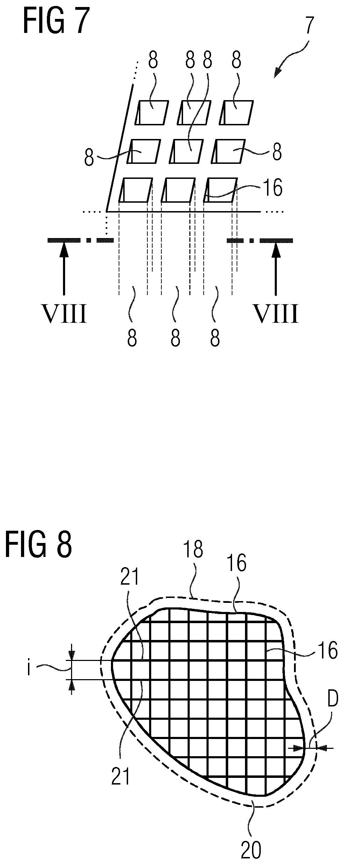

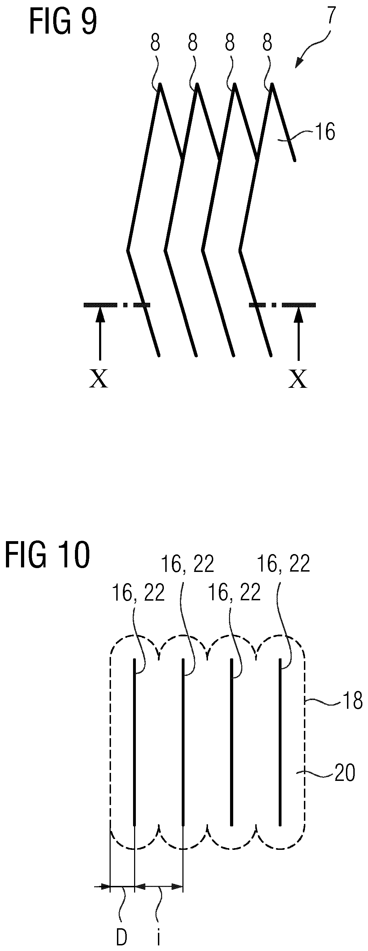

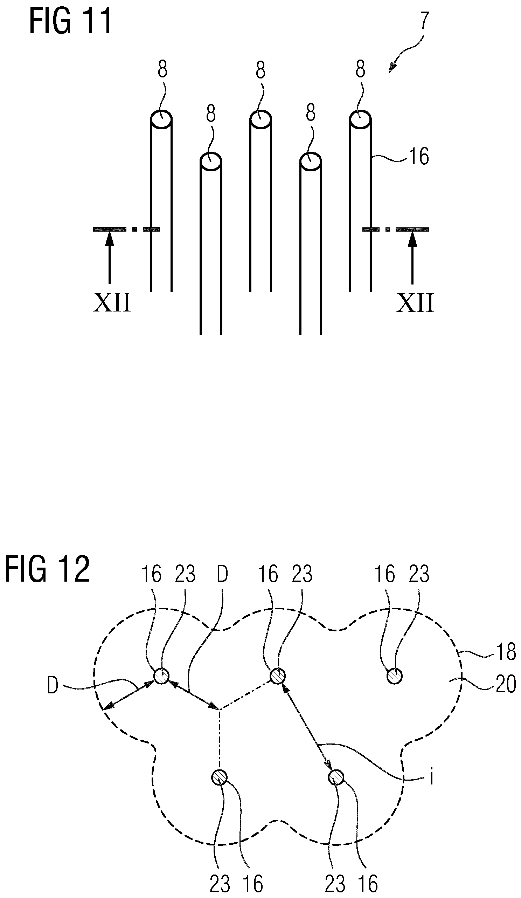

Another kind of support arrangement 7 shown in figure 7 comprises a plurality of pipe-like supports 8 which can be seen as a grid-like structure in the section view of figure 8. In this example, the distance i between two adjacent grid lines 21 is equal to twice the threshold D, i.e. i=2D. Since the support arrangement 7 has a closed boundary, the value for D is chosen relatively small as compared to the support arrangements 7 shown in figures 10 and 12.

Yet another kind of support arrangement 7 shown in figure 9 comprises four parallel wall-like supports 8 which can be seen as four parallel lines 22 in the section view of figure 10. In this example, the distance i between two adjacent lines 22 is equal to twice the threshold D, i.e. i=2D.

Yet another kind of support arrangement 7 shown in figure 11 comprises five supports 8 in the form of parallel cylindrical columns which can be seen as five dots 23 in the section view of figure 12. In this example, the distance i between two adjacent dots 23 is equal to the threshold D multiplied by cos (30°).

As can be seen for example in figures 10 and 12, the support arrangement 7 consisting of the supports 8 represented by facetted surfaces 16 is converted into a volume which is a sub-volume 20 of the build-up volume 1 and represents the support arrangement 7 as a solid body.

## Claims

1. A computer-implemented method for generating a structure mesh (9) of a structure (2) and using the structure mesh (9) for simulating an additive manufacturing build-up process of the structure (2),
wherein said structure mesh (9) is to be build-up in a three-dimensional build-up volume (1) in the additive manufacturing build-up process and which comprises at least one specimen (6a,b) and at least one support (8a,b) for supporting the at least one specimen (6a,b) on a boundary (5) of the build-up volume (1),
**characterized in that**
the method comprises the steps of:
a) providing a build-up volume surface mesh (10) that represents a boundary (5) of the three-dimensional build-up volume (1);
b) providing at least one specimen mesh (9a) including a specimen surface mesh representing at least the outer surface of a corresponding specimen (6a,b) within an interior space surrounded by the build-up volume surface mesh (10);
c) creating a three-dimensional background mesh (12) in the cavity between the build-up volume surface mesh (10) and the at least one specimen surface mesh (11a,b) using the at least one specimen surface mesh (11a,b) as a seed mesh, wherein the background mesh (12) is composed of elements (13) consisting of background mesh nodes (14) and background mesh edges (15) extending between the background mesh nodes (14);
d) identifying at least one support mesh (9b) and at least one environment mesh (17) which is defined by the background mesh (12) except for regions of the at least one support mesh (9b) using the background mesh (12) and surface data, that describe a facetted surface (16) of the at least one support (8a,b), wherein the at least one support mesh (9b) and the at least one specimen mesh (9a) together define the structure mesh (9) which is generated in such a way that the at least one support mesh (9b), the at least one specimen mesh (9a) and the at least one environment mesh (17) are connected with each other so that two neighboring meshes share the same nodes at their interfaces in their transition area, wherein step b) comprises providing at least one three-dimensional specimen mesh (9a) which represents a discretization not only of the surface of the at least one specimen (6a,b) but of the entire volume of the at least one specimen (6a,b), and
wherein step c) comprises discretizing the cavity with background mesh elements (13) having the same size and/or shape as three-dimensional specimen mesh elements of the at least one three-dimensional specimen mesh (9a).

2. The method according to claim 1, wherein said surface data is stereolithography data.

3. The method according to claim 1 or 2,
**characterized in that**
step c) comprises creating a three-dimensional background mesh (12) whose background mesh elements (13) are tetrahedron-shaped, pyramid-shaped, hexahedron-shaped and/or cuboid-shaped.

4. The method according to claim 1, 2 or 3,
**characterized in that**
step c) comprises creating a background mesh (12) having smaller elements (13) in a region of the build-up volume (1) where the at least one support (8a,b) is expected to be located, in particular in a region defined by a geometrical bounding box that encloses the at least one support (8a,b) and comprises all elements thereof, and larger elements (13) outside this region.

5. The method according to any of claims 1 to 4,
**characterized in that**
step d) comprises identifying surfaces (18), in particular outer surfaces, of the at least one support (8a,b) within the background mesh (12) by identifying points of intersection (19) of the surfaces (18) of the at least one support (8a,b) with background mesh edges (15), creating new nodes at the points of intersection (19), thus splitting the respective background mesh edges (15), and interconnecting at least some of the new nodes to create at least one support surface mesh.

6. The method according to claim 5,
**characterized in that**
the surfaces (18) of the at least one support (8a,b) identified in step d) are surfaces (18) of a sub-volume (20) of the build-up volume (1) that represents the at least one support (8a,b) as simulated in contrast to the at least one support (8a,b) as actually build-up in the additive manufacturing build-up process.

7. The method according to claim 6,
**characterized in that**
the sub-volume (20) of the build-up volume (1) that represents the at least one support (8a,b) as simulated is defined as the set of points within the build-up volume (1) that are located at a distance inferior to a threshold D to the closest facet of the facetted surface (16) of the at least one support (8a,b) described by the surface data, wherein the threshold D is preferably chosen as the minimal distance such that any point located in the interior of the at least one support (8a,b) is at most at a distance d to the closest facet of the at least one support (8a,b), wherein the value of d corresponds to the value of D.

8. The method according to any one of the foregoing claims,
**characterized in that**
step d) comprises identifying an environment mesh (17), in particular a powder mesh, which is an environment bubble mesh enclosed in a support mesh (9b), wherein the environment bubble mesh (17) is eliminated by making it part of the support mesh (9b) in which it is enclosed, and/or that step d) comprises identifying a support mesh (9b) which is a support bubble mesh not connected to the at least one specimen (6a,b) nor a build-up volume boundary (5), wherein the support bubble mesh (9b) is eliminated by making it part of the at least one environment mesh (17).

9. The method according to any one of the foregoing claims,
**characterized in that**
especially after eliminating bubble meshes at least one resulting mesh is improved to meet a predefined element quality and element size.

10. The method according to claim 8,
**characterized in that**
the background mesh elements (13) are adapted by a mesh adaptation method, especially a local mesh adaptation method.

11. The method according to claim 8 or 9,
**characterized in that**
at least one surface mesh (10, 11a,b), especially surface meshes (10, 11a,b) made of boundaries of specimen, support and environment regions within the build-up volume (1), is remeshed by replacing the at least one surface mesh (10, 11a,b) with a new surface mesh of at least substantially uniform edge length, wherein the at least one new surface mesh resulting from the remeshing is preferably used as seed mesh in generating new three-dimensional meshes.

12. The method according to any one of the foregoing claims,
**characterized in that**
the interior of the at least one specimen (6a,b) defined by the at least one specimen surface mesh (11a,b) is meshed, especially in accordance with a discretization that is extracted from existing CAD data of the at least one specimen (6a,b).

13. The method according to any of claims 5 to 7 or any of claims 8 to 12, if referred back to claim 5,
**characterized in that**
a support surface mesh (9b) defines a closed volume which is meshed by a volume meshing technique.

14. Use of a structure mesh (9) of a structure (2) generated according to a method of any one of the foregoing claims for simulating, especially thermal, mechanical and/or thermo-mechanical simulating, an additive manufacturing build-up process, in particular a powder bed fusion based build-up process, of the structure (2).

15. A computer program comprising instructions which, when the program is executed by at least one computer, cause the at least one computer to carry out the method according to any one of the foregoing claims.

16. A computer-readable medium comprising instructions which, when executed on at least one computer, cause the at least one computer to perform the steps of the method according to any one of claims 1 to 13.

## Patentansprüche

1. Computerimplementiertes Verfahren zur Erzeugung eines Strukturnetzes (9) einer Struktur (2) und Verwendung des Strukturnetzes (9) zum Simulieren eines additiven Fertigungsprozesses der Struktur (2),
wobei das Strukturgeflecht (9) in einem dreidimensionalen Aufbauvolumen (1) in dem additiven Fertigungsprozess aufgebaut werden soll und mindestens eine Probe (6a,b) und mindestens einen Träger (8a,b) zum Abstützen der mindestens einen Probe (6a,b) an einer Begrenzung (5) des Aufbauvolumens (1) umfasst, **dadurch gekennzeichnet, dass**
das Verfahren die folgenden Schritte umfasst:
a) Bereitstellen eines Aufbauvolumenoberflächennetzes (10), das eine Begrenzung (5) des dreidimensionalen Aufbauvolumens (1) darstellt;
b) Bereitstellen mindestens eines Probennetzes (9a), das ein Probenoberflächennetz beinhaltet, das mindestens die Außenfläche einer entsprechenden Probe (6a,b) innerhalb eines von dem Aufbauvolumenoberflächennetz (10) umschlossenen Innenraums darstellt;
c) Erzeugen eines dreidimensionalen Hintergrundnetzes (12) in dem Hohlraum zwischen dem Aufbauvolumenoberflächennetz (10) und dem mindestens einen Probenoberflächennetz (11a,b) unter Verwendung des mindestens einen Probenoberflächennetzes (11a,b) als Seed-Netz, wobei das Hintergrundnetz (12) aus Elementen (13) zusammengesetzt ist, die aus Hintergrundnetzknoten (14) und sich zwischen den Hintergrundnetzknoten (14) erstreckenden Hintergrundnetzkanten (15) bestehen;
d) Identifizieren mindestens eines Stütznetzes (9b) und mindestens eines Umgebungsnetzes (17), welches durch das Hintergrundnetz (12) definiert ist, mit Ausnahme von Bereichen des mindestens einen Stütznetzes (9b) unter Verwendung des Hintergrundnetzes (12) und von Oberflächendaten, welche eine facettierte Oberfläche (16) des mindestens einen Trägers (8a,b) beschreiben, wobei das mindestens eine Stütznetz (9b) und das mindestens eine Probennetz (9a) zusammen das Strukturnetz (9) definieren, welches derart erzeugt wird, dass das mindestens eine Stütznetz (9b), das mindestens eine Probennetz (9a) und das mindestens eine Umgebungsnetz (17) so miteinander verbunden sind, dass sich zwei benachbarte Netze an ihren Grenzflächen in ihrem Übergangsbereich die gleichen Knoten teilen, wobei Schritt b) das Bereitstellen mindestens eines dreidimensionalen Probennetzes (9a) umfasst, das eine Diskretisierung nicht nur der Oberfläche der mindestens einen Probe (6a,b), sondern des gesamten Volumens der mindestens einen Probe (6a,b) darstellt, und
wobei Schritt c) das Diskretisieren des Hohlraums mit Hintergrundnetzelementen (13) umfasst, die die gleiche Größe und/oder Form wie dreidimensionale Probennetzelemente des mindestens einen dreidimensionalen Probennetzes (9a) aufweisen.

2. Verfahren nach Anspruch 1, wobei die Oberflächendaten Stereolithographiedaten sind.

3. Verfahren nach Anspruch 1 oder 2,
**dadurch gekennzeichnet, dass**
der Schritt c) das Erzeugen eines dreidimensionalen Hintergrundnetzes (12) umfasst, dessen Hintergrundnetzelemente (13) tetraeder-, pyramiden-, hexaeder- und/oder quaderförmig ausgebildet sind.

4. Verfahren nach Anspruch 1, 2 oder 3,
**dadurch gekennzeichnet, dass**
der Schritt c) das Erzeugen eines Hintergrundnetzes (12) mit kleineren Elementen (13) in einem Bereich des Aufbauvolumens (1) umfasst, in dem sich der mindestens eine Träger (8a,b) voraussichtlich befinden wird, insbesondere in einem Bereich, der durch einen geometrischen Begrenzungsrahmen definiert ist, der den mindestens einen Träger (8a,b) umschließt und alle Elemente davon umfasst, und größere Elemente (13) außerhalb dieses Bereichs.

5. Verfahren nach einem der Ansprüche 1 bis 4,
**dadurch gekennzeichnet, dass**
Schritt d) das Identifizieren von Oberflächen (18), insbesondere von Außenflächen des mindestens einen Trägers (8a,b) innerhalb des Hintergrundnetzes (12) durch Identifizieren von Kreuzungspunkten (19) der Oberflächen (18) des mindestens einen Trägers (8a,b) mit Hintergrundnetzkanten (15) sowie das Erzeugen neuer Knoten an den Kreuzungspunkten (19), wodurch die jeweiligen Hintergrundnetzkanten (15) aufgeteilt werden, und das Verbinden von mindestens einigen der neuen Knoten, um mindestens ein Stützflächennetz zu erzeugen, umfasst.

6. Verfahren nach Anspruch 5,
**dadurch gekennzeichnet, dass**
die in Schritt d) identifizierten Oberflächen (18) des mindestens einen Trägers (8a,b) Oberflächen (18) eines Teilvolumens (20) des Aufbauvolumens (1) sind, welches den mindestens einen Träger (8a,b) als simuliert im Gegensatz zu dem mindestens einen Träger (8a,b) als tatsächlich in dem additiven Fertigungsprozess aufgebaut darstellt.

7. Verfahren nach Anspruch 6,
**dadurch gekennzeichnet, dass**
das Teilvolumen (20) des Aufbauvolumens (1), das den mindestens einen Träger (8a,b) als simuliert darstellt, als die Menge von Punkten innerhalb des Aufbauvolumens (1) definiert ist, die sich in einem Abstand befinden, der unterhalb einer Schwelle D zu der nächsten Facette der durch die Oberflächendaten beschriebenen facettierten Oberfläche (16) des mindestens einen Trägers (8a,b) liegt, wobei die Schwelle D vorzugsweise als minimaler Abstand so gewählt ist, dass jeder im Inneren des mindestens einen Trägers (8a,b) befindliche Punkt höchstens einen Abstand d zu der nächsten Facette des mindestens einen Trägers aufweist (8a,b), wobei der Wert von d dem Wert von D entspricht.

8. Verfahren nach einem der vorstehenden Ansprüche,
**dadurch gekennzeichnet, dass**
Schritt d) das Identifizieren eines Umgebungsnetzes (17) umfasst, insbesondere eines Pulvernetzes, welches ein in einem Stütznetz (9b) eingeschlossenes Umgebungsblasennetz ist, wobei das Umgebungsblasennetz (17) dadurch eliminiert wird, dass es zu einem Teil des Stütznetzes (9b) gemacht wird, in welchem es eingeschlossen ist, und/oder dass Schritt d) das Identifizieren eines Stütznetzes (9b) umfasst, welches ein nicht mit der mindestens einen Probe (6a,b) verbundenes Stützblasennetz oder eine Aufbauvolumengrenze (5) ist, wobei das Stützblasennetz (9b) dadurch eliminiert wird, dass es zu einem Teil des mindestens einen Umgebungsnetzes (17) gemacht wird.

9. Verfahren nach einem der vorstehenden Ansprüche,
**dadurch gekennzeichnet, dass**
insbesondere nach dem Entfernen von Blasennetzen mindestens ein resultierendes Netz verbessert wird, um eine vorgegebene Elementqualität und Elementgröße zu erfüllen.

10. Verfahren nach Anspruch 8,
**dadurch gekennzeichnet, dass**
die Hintergrundnetzelemente (13) durch ein Netzanpassungsverfahren, insbesondere ein lokales Netzanpassungsverfahren, adaptiert werden.

11. Verfahren nach Anspruch 8 oder 9,
**dadurch gekennzeichnet, dass**
mindestens ein Oberflächennetz (10, 11a,b), insbesondere Oberflächennetze (10, 11a,b) aus Begrenzungen von Proben-, Stütz- und Umgebungsbereichen innerhalb des Aufbauvolumens (1) durch Ersetzen des mindestens einen Oberflächennetzes (10, 11a,b) durch ein neues Oberflächennetz von zumindest im Wesentlichen einheitlicher Kantenlänge wieder vernetzt wird, wobei das aus der Neuvernetzung resultierende mindestens eine neue Oberflächennetz vorzugsweise als Seed-Netz zur Erzeugung neuer dreidimensionaler Netze verwendet wird.

12. Verfahren nach einem der vorstehenden Ansprüche,
**dadurch gekennzeichnet, dass**
das Innere der wenigstens einen durch das wenigstens eine Probenoberflächennetz (11a,b) definierten Probe (6a,b) vernetzt ist, insbesondere gemäß einer Diskretisierung, die aus vorhandenen CAD-Daten der wenigstens einen Probe (6a,b) extrahiert ist.

13. Verfahren nach einem der Ansprüche 5 bis 7 oder einem der Ansprüche 8 bis 12, falls auf Anspruch 5 zurückbezogen,
**dadurch gekennzeichnet, dass**
ein Stützflächennetz (9b) ein geschlossenes Volumen definiert, das durch eine Volumenvernetzungstechnik vernetzt wird.

14. Verwendung eines Strukturnetzes (9) einer Struktur (2), das gemäß einem Verfahren nach einem der vorstehenden Ansprüche erzeugt wurde, zur Simulation, insbesondere thermischen, mechanischen und/oder thermomechanischen Simulation, eines Aufbauprozesses der Struktur (2) für die additive Fertigung, insbesondere eines auf Pulverbettfusion basierenden Aufbauprozesses.

15. Computerprogramm, umfassend Anweisungen, die bei Ausführung des Programms durch mindestens einen Computer den mindestens einen Computer dazu veranlassen, das Verfahren gemäß einem der vorstehenden Ansprüche durchzuführen.

16. Computerlesbares Medium, umfassend Anweisungen, die, bei Ausführung auf mindestens einem Computer, den mindestens einen Computer dazu veranlassen, die Schritte des Verfahrens gemäß einem der Ansprüche 1 bis 13 auszuführen.

## Revendications

1. Un procédé mis en œuvre par ordinateur pour créer un maillage (9) de structure d'une structure (2) et utiliser le maillage (9) de structure pour simuler une opération d'accumulation par fabrication additive de la structure (2),
dans lequel ledit maillage (9) de structure est à accumuler dans un volume (1) accumulé en trois dimensions par l'opération d'accumulation par fabrication additive et qui comprend au moins un spécimen (6a, b) et au moins un support (8a, b) pour supporter le au moins un spécimen (6a, b) sur une limite (5) du volume (1) accumulé,
**caractérisé en ce que**
le procédé comprend les stades :
a) se procurer un maillage (10) de surface du volume accumulé, qui représente une limite (5) du volume (1) accumulé en trois dimensions ;
b) se procurer au moins un maillage (9a) de spécimen comprenant un maillage de surface de spécimen représentant au moins la surface extérieure d'un spécimen (6a, b) correspondant dans un espace intérieur entouré par le maillage (10) de surface du volume accumulé ;
c) créer un maillage (12) d'arrière-plan en trois dimensions dans la cavité entre le maillage (10) de surface du volume accumulé et le au moins un maillage (11a, b) de surface du spécimen en utilisant le au moins un maillage (11a, b) de surface du spécimen comme maillage germe, dans lequel le maillage (12) d'arrière-plan est composé d'éléments (13) consistant en des nœuds (14) de maillage d'arrière-plan et en des côtés (15) de maillage d'arrière-plan s'étendant entre les nœuds (14) de maillage d'arrière-plan ;
d) identifier au moins un maillage (9b) de support et au moins un maillage (17) d'environnement, qui est défini par le maillage (12) d'arrière-plan à l'exception de régions du au moins un maillage (9b) de support, en utilisant le maillage (12) d'arrière-plan et des données de surface, qui décrivent une surface (16) facettée du au moins un support (8a, b), dans lequel le au moins un maillage (9b) de support et le au moins un maillage (9a) de spécimen définissent ensemble le maillage (9) de structure, qui est créé d'une façon telle que le au moins un maillage (9b) de support, le au moins un maillage (9a) de spécimen et le au moins un maillage (17) d'environnement soient reliés les uns aux autres de manière à ce que deux maillages voisins partagent les mêmes nœuds à leurs interfaces dans leur zone de transition, dans lequel le stade b) comprend se procurer au moins un maillage (9a) de spécimen en trois dimensions, qui représente une discrétisation non seulement de la surface du au moins un spécimen (6a, b) mais de tout le volume du au moins un spécimen (6a, b), et
dans lequel le stade c) comprend discrétiser la cavité avec des éléments (13) de maillage d'arrière-plan ayant la même dimension et/ou forme que les éléments de maillage de spécimen en trois dimensions du au moins un maillage (9a) de spécimen en trois dimensions.

2. Le procédé suivant la revendication 1, dans lequel ladite donnée de surface est une donnée de stéréolithographie.

3. Le procédé suivant la revendication 1 ou 2, **caractérisé en ce que**
le stade c) comprend créer un maillage (12) d'arrière-plan en trois dimensions, dont les éléments (13) de maillage d'arrière-plan sont en forme de tétraèdre, en forme de pyramide en forme d'hexaèdre et/ou en forme de cube.

4. Le procédé suivant la revendication 1, 2 ou 3,
**caractérisé en ce que**
le stade c) comprend créer un maillage (12) d'arrière-plan ayant des éléments (13) plus petits dans une région du volume (1) accumulé où l'on s'attend à ce que le au moins un support (8a, b) se trouve, en particulier dans une région définie par une boîte géométrique de limitation, qui entoure le au moins un support (8a, b) et en comprend tous les éléments, et des éléments (13) plus grands à l'extérieur de cette région.

5. Le procédé suivant l'une quelconque des revendications 1 à 4,
**caractérisé en ce que**
le stade d) comprend identifier des surfaces (18), en particulier des surfaces extérieures du au moins un support (8a, b), dans le maillage (12) d'arrière-plan, en identifiant des points d'intersection (19) des surfaces (18) du au moins un support (8a, b) avec des côtés (15) du maillage d'arrière-plan et de nouveaux nœuds aux points d'intersection (19), en segmentant ainsi les côtés (15) respectifs du maillage d'arrière-plan, et interconnecter au moins certains des nouveaux nœuds pour créer au moins un maillage de surface de support.

6. Le procédé suivant la revendication 5,
**caractérisé en ce que**
les surfaces (18) du au moins un support (8a, b) identifié dans le stade d) sont des surfaces (18) d'un sous-volume (20) du volume (1) accumulé, qui représente le au moins un support (8a, b) tel que simulé contrairement au au moins un support (8a, b) tel qu'accumulé en cours dans l'opération d'accumulation par fabrication additive.

7. Le procédé suivant la revendication 6,
**caractérisé en ce que**
le sous-volume (20) du volume (1) accumulé, qui représente le au moins un support (8a, b) tel que simulé, est défini comme l'ensemble de points dans le volume (1) accumulé, qui sont situés à une distance inférieure à un seuil D de la facette la plus proche de la surface (16) facettée du au moins un support (8a, b) décrit par la donnée de surface, dans lequel le seuil D est choisi de préférence comme étant la distance minimum telle que tout point situé à l'intérieur du au moins un support (8a, b) est au plus à une distance d de la facette la plus proche du au moins un support (8a, b), dans lequel la valeur de d correspond à la valeur de D.

8. Le procédé suivant l'une quelconque des revendications précédentes,
**caractérisé en ce que**
le stade d) comprend identifier un maillage (17) d'environnement, en particulier un maillage de poudre, qui est un maillage de bulle d'environnement enfermé dans un maillage (9b) de support, dans lequel le maillage (17) de bulle d'environnement est éliminé en le faisant une partie du maillage (9b) de support, dans lequel il est enfermé, et/ou **en ce que** le stade d) comprend identifier un maillage (9b) de support, qui est un maillage de bulle de support non relié au au moins un spécimen (6a, b) ni une limite (5) de volume accumulé, dans lequel le maillage (9b) de bulle de support est éliminé en le faisant une partie du au moins un maillage (17) d'environnement.

9. Le procédé suivant l'une quelconque des revendications précédentes,
**caractérisé en ce que**
spécialement après avoir éliminé des maillages de bulle, au moins un maillage résultant est amélioré pour satisfaire une qualité d'élément et une dimension d'élément définies à l'avance.

10. Le procédé suivant la revendication 8,
**caractérisé en ce que**
les éléments (13) de maillage d'environnement sont adaptés par un procédé d'adaptation de maillage, en particulier par un procédé local d'adaptation de maillage.

11. Le procédé suivant la revendication 8 ou 9,
**caractérisé en ce qu'**
au moins un maillage (10, 11a, b) de surface, en particulier des maillages (10, 11a, b) de surface faits de limites de spécimen de support et de régions d'environnement dans le volume (1) accumulé, est remaillé en remplaçant le au moins un maillage (10, 11a, b) de surface par un nouveau maillage de surface d'une longueur de côté au moins sensiblement uniforme, dans lequel le au moins un nouveau maillage de surface résultant du remaillage est utilisé de préférence comme maillage germe pour créer de nouveaux maillages en trois dimensions.

12. Le procédé suivant l'une quelconque des revendications précédentes,
**caractérisé en ce que**
l'intérieur du au moins un spécimen (6a, b) défini par le au moins un maillage (11a, b) de surface de spécimen est maillé, en particulier suivant une discrétisation, qui est extraite de données CAD existantes du au moins un spécimen (6a, b).

13. Le procédé suivant l'une quelconque des revendications 5 à 7 ou de l'une quelconque des revendications 8 à 12, si elles se rapportent à la revendication 5,
**caractérisé en ce qu'**
un maillage (9b) de surface de support définit un volume fermé, qui est maillé par une technique de maillage en volume.

14. Utilisation d'un maillage (9) de structure d'une structure (2) créée suivant un procédé selon l'une quelconque des revendications précédentes, pour simuler, en particulier pour simuler thermiquement, mécaniquement et/ou thermomécaniquement une opération d'accumulation par fabrication additive, en particulier une opération d'accumulation reposant sur la fusion d'un lit de poudre de la structure (2).

15. Un programme d'ordinateur comprenant des instructions qui, lorsque le programme est exécuté par au moins un ordinateur, font que le au moins un ordinateur exécute le procédé suivant l'une quelconque des revendications précédentes.

16. Un support déchiffrable par ordinateur comprenant des instructions qui, lorsqu'elles sont exécutées sur au moins un ordinateur, font que le au moins un ordinateur effectue les stades du procédé suivant l'une quelconque des revendications 1 à 13.
